(19) Europäisches Patentamt / European Patent Office / Office européen des brevets

(11) **EP 3 339 353 B1**

(12) **EUROPEAN PATENT SPECIFICATION**

(45) Date of publication and mention
of the grant of the patent:
**22.07.2020 Bulletin 2020/30**

(21) Application number: **16837085.6**

(22) Date of filing: **12.08.2016**

(51) Int Cl.:
*B29B 7/60* *(2006.01)*     *B29B 7/48* *(2006.01)*
*B29B 7/72* *(2006.01)*     *B29B 7/74* *(2006.01)*
*B29C 48/375* *(2019.01)*   *B29C 48/385* *(2019.01)*
*B29C 48/395* *(2019.01)*   *B29C 48/52* *(2019.01)*
*C08F 8/04* *(2006.01)*     *C08F 297/04* *(2006.01)*
*C08J 3/00* *(2006.01)*     *C08L 53/02* *(2006.01)*
*C08F 2/06* *(2006.01)*     *C08F 4/48* *(2006.01)*
*C08F 236/08* *(2006.01)*

(86) International application number:
**PCT/JP2016/073788**

(87) International publication number:
**WO 2017/030095 (23.02.2017 Gazette 2017/08)**

(54) **METHOD FOR PRODUCING A THERMOPLASTIC POLYMER COMPOSITION**

VERFAHREN ZUR HERSTELLUNG EINER THERMOPLASTISCHEN
POLYMERZUSAMMENSETZUNG

PROCÉDÉ DE PRODUCTION D'UNE COMPOSITION DE POLYMÈRE THERMOPLASTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.08.2015 JP 2015161985**

(43) Date of publication of application:
**27.06.2018 Bulletin 2018/26**

(73) Proprietor: **Kuraray Co., Ltd.
Kurashiki-shi, Okayama 710-0801 (JP)**

(72) Inventors:
• **OSHITA, Shinya**
  **Kamisu-shi**
  **Ibaraki 314-0197 (JP)**
• **JOGO, Yosuke**
  **Kamisu-shi**
  **Ibaraki 314-0197 (JP)**
• **HIRAYAMA, Yoshio**
  **Kamisu-shi**
  **Ibaraki 314-0197 (JP)**

(74) Representative: **Müller-Boré & Partner
Patentanwälte PartG mbB
Friedenheimer Brücke 21
80639 München (DE)**

(56) References cited:
**EP-A1- 2 484 717**     **EP-A1- 2 484 723**
**WO-A1-2011/040586**   **JP-A- H11 262 945**
**JP-A- 2000 052 335**    **JP-A- 2002 219 710**
**JP-A- 2006 256 099**    **US-A1- 2011 245 405**
**US-A1- 2013 090 420**

**Description**

The present invention relates to a method for producing a thermoplastic polymer composition. In more detail, the present invention relates to a thermoplastic polymer composition containing a hydrogenated block copolymer and a polyisobutylene.

As one of hydrogenated block copolymers, a hydrogenated product of a block copolymer having a polymer block composed mainly of an aromatic vinyl compound and a polymer block composed mainly of a conjugated diene is known. The foregoing hydrogenated product of a block copolymer not only has excellent heat resistance, weather resistance, impact resistance, and flexibility but also exhibits strength and elastic characteristics equal to those in conventional vulcanized rubbers without being vulcanized. In view of the matter that the foregoing hydrogenated product of a block copolymer has such characteristics, it is used recently in a wide-ranging field inclusive of medical members, automobile components, consumer electrical appliances, toys, sporting goods, daily goods, stoppers for a container, and so on. In such a case, the block copolymer is not only used alone but also used for a component of a thermoplastic polymer composition including various additives such as a softening agent, etc., and optionally a thermoplastic resin such as a polyolefin-based resin, etc.

Examples of the softening agent which is blended in the hydrogenated block copolymer include paraffin-based, naphthene-based, or aromatic process oils; phthalic acid derivatives; white oil; mineral oil; a liquid cooligomer between ethylene and an $\alpha$-olefin; liquid paraffin; a polybutene; a low-molecular weight polyisobutylene; a liquid polybutadiene, a liquid polyisoprene, a liquid poly(isoprene-butadiene) copolymer; and the like (see Patent Document 1). Among these, it is known that when a low-molecular weight polyisobutylene is blended as the softening agent in the hydrogenated block copolymer, there is a tendency that gas barrier properties and water vapor barrier properties are improved. Accordingly, it is the actual situation that there may be a case where it is necessary to blend a low-molecular weight polyisobutylene but not other softening agent depending upon an application of the thermoplastic polymer composition.

However, in particular, as for a polyisobutylene having a peak top molecular weight (Mp) of 5,000 to 80,000, even when heated, its stickiness is very high, and because of the stickiness, it was extremely difficult to supply and blend the polyisobutylene in a hydrogenated block copolymer. In Example 9 of Patent Document 1 which was filed previously by the present applicant, a thermoplastic polymer composition having a polyisobutylene having a peak top molecular weight (Mp) of 51,700 blended therein is produced; however, the actually conducted work was not easy as in the case of using other softening agent. In the foregoing Example 9, the polyisobutylene having extremely high stickiness and having a peak top molecular weight (Mp) of 51,700 was blended by force in a hydrogenated block copolymer and a polyolefin resin and then preliminarily mixed; and though the resulting mixture was extremely high in stickiness, too, by supplying this mixture by force to a twin-screw extruder, the thermoplastic polymer composition was barely obtained. Accordingly, in the case of repeating the same operation, its work becomes very difficult.

In fact, it was not easy to industrially carry out the production of the thermoplastic polymer composition in which the polyisobutylene having a peak top molecular weight (Mp) of 5,000 to 80,000 is blended in the hydrogenated block copolymer in this way.

Patent Document 2 and Patent Document 3 disclose a method of supplying a rubber to a twin-screw extruder using a rubber supply extruder. As the rubber, there are exemplified rubbers having low stickiness, such as olefin-based copolymer rubbers, for example an ethylene-$\alpha$-olefin-based copolymer rubber, etc.; a styrene-butadiene rubber (SBR), a butyl rubber (IIR), an isoprene rubber (IR), a fluororubber, a silicone rubber, a urethane rubber, and an acrylic rubber, etc. In particular, Patent Document 3 describes, as an advantage, the matter that by using the rubber supply extruder, such a rubber lump can be utilized in a veil form as it is without being ground. On the other hand, Patent Document 3 does not describe the use of a polyisobutylene having high stickiness and having a peak top molecular weight (Mp) of 5,000 to 80,000.

EP 2 484 717 A1 describes a container stopper comprising a foam-molded article.

Patent Document 1: WO 2011/040586 A
Patent Document 2: JP 2006-256099 A
Patent Document 3: JP 11-262945 A

In the light of the above, heretofore, a method in which a polyisobutylene having a peak top molecular weight (Mp) of 5,000 to 80,000 is easily supplied to a hydrogenated block copolymer to stably produce a thermoplastic polymer composition has not been known.

Thus, a problem of the present invention is to provide a method in which a polyisobutylene having a peak top molecular weight (Mp) of 5,000 to 80,000 is easily supplied to a hydrogenated block copolymer to stably produce a thermoplastic polymer composition.

In order to solve the aforementioned problem, the present inventors made extensive and intensive investigations.

As a result, it has been found that by using a specified extruder, a polyisobutylene having a peak top molecular weight (Mp) of 5,000 to 80,000 can be thoroughly plasticized, and at the same time, by supplying the plasticized polyisobutylene to a twin-screw extruder by a quantitative pump, the polyisobutylene can be easily kneaded together with a hydrogenated block copolymer, and a thermoplastic polymer composition can be stably produced, thereby leading to the present invention.

The present invention is able to provide a method in which a polyisobutylene having a peak top molecular weight (Mp) of 5,000 to 80,000 is easily supplied to a hydrogenated block copolymer to stably produce a thermoplastic polymer composition. According to the present invention, it is possible to industrially carry out the production of a thermoplastic polymer composition containing a hydrogenated block copolymer and a polyisobutylene having a peak top molecular weight (Mp) of 5,000 to 80,000.

Fig. 1 is a diagrammatic view showing an embodiment of a production method of a thermoplastic polymer composition of the present invention.

Fig. 2 is a diagrammatic view showing an embodiment of a production method of a thermoplastic polymer composition of the present invention.

Fig. 3 is a diagrammatic view showing an embodiment of a twin-screw extruder which is used in the present invention.

[Production Method of Thermoplastic Polymer Composition]

The present invention is concerned with a method according to claim 1 for producing a thermoplastic polymer composition comprising a hydrogenated block copolymer (a) and a polyisobutylene (b) having a peak top molecular weight (Mp) of 5,000 to 80,000 expressed in terms of standard polystyrene as determined by gel permeation chromatography [hereinafter sometimes referred to simply as "polyisobutylene (b)"], the method comprising a first step and a second step:

First step: a step of supplying the polyisobutylene (b) to a twin-screw/single-screw extruder of a counter-rotating type, to plasticize the polyisobutylene (b) wherein the twin-screw/single-screw extruder is equipped with a screw which is configured of two screws having a different length from each other, and an upstream part is twin-screw, whereas a downstream part is single-screw; and

Second step: a step including a step (i) and a step (ii):

(i) a step of supplying the hydrogenated block copolymer (a) to a twin-screw extruder; and

(ii) a step of supplying the polyisobutylene (b) plasticized in the first step to the twin-screw extruder via a quantitative pump and kneading the polyisobutylene (b) together with the hydrogenated block copolymer (a) supplied in the step (i).

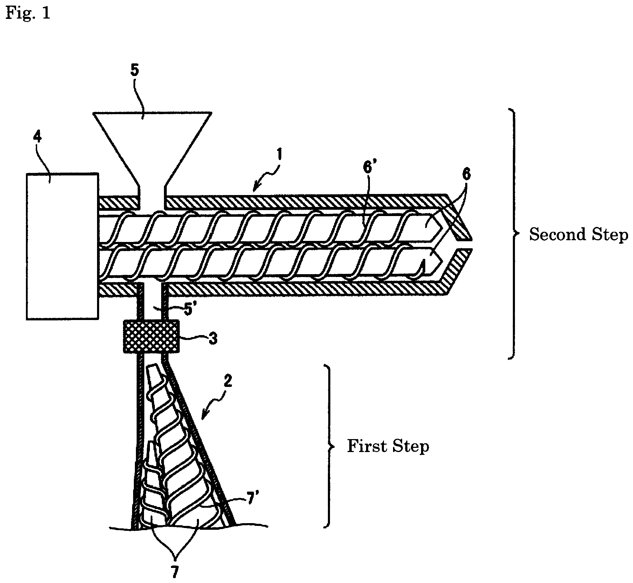

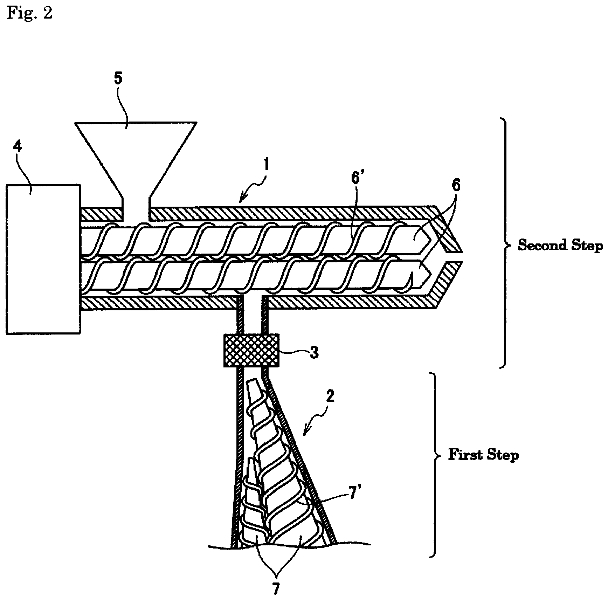

Fig. 1 and Fig. 2 are each a diagrammatic view of an embodiment of an apparatus which can be used for the production method of a thermoplastic polymer composition of the present invention.

In the first step, the polyisobutylene (b) is plasticized by supplying the polyisobutylene (b) to a twin-screw/single-screw extruder 2 equipped with a screw 7 having a spirally wound screw blade 7'. The screw 7 is configured of two screws having a different length from each other, and an upstream part is twin-screw, whereas a downstream part is single-crew. Though the twin-screw/single-screw extruder may be a parallel-type twin-screw/single-screw extruder or a conical-type twin-screw/single-screw extruder, it is preferably a conical-type twin-screw/single-screw extruder from the viewpoint of a magnitude of the torque.

Meanwhile, in the step (i) of the second step, the hydrogenated block copolymer (a) is supplied to a twin-screw extruder 1 from a hopper 5. Then, in the step (ii) of the second step, by supplying the polyisobutylene (b) plasticized in the first step to a quantitative pump 3 and quantitatively supplying the polyisobutylene (b) to the twin-screw extruder 1 from a supply port 5' by the quantitative pump 3, the polyisobutylene (b) is kneaded together with the hydrogenated block copolymer (a) supplied in the step (i), thereby obtaining the thermoplastic polymer composition.

Each of the steps is hereunder described in detail.

(First Step)

In the first step, the polyisobutylene (b) is supplied to the twin-screw/single-screw extruder of a counter-rotating type and plasticized. The twin-screw/single-screw extruder is not particularly limited so long as it is of a type in which the respective screws of the two axes are rotated in a counter-rotating fashion, and any conventionally known twin-screw/single-screw extruders may be used. As mentioned above, the twin-screw/single-screw extruder is configured of two screws having a different length from each other and has a configuration in which an upstream part is twin-screw, whereas a downstream part is single-crew. As for the lengths of the two screws, in general, the length of the longer screw is preferably 1.2 times or more, more preferably 1.3 to 5 times, and still more preferably 1.5 to 3 times of the length of the shorter screw.

In the first step, when the polyisobutylene (b) is plasticized, it becomes possible to quantitatively supply the polyisobutylene (b) to the twin-screw extruder by the quantitative pump in the second step. Also, the hydrogenated block copolymer (a) and the polyisobutylene (b) may be thoroughly evenly mixed within the twin-screw extruder, and mechanical characteristics of the resulting thermoplastic polymer composition, such as tensile strength at break, etc., become stable. In the present specification, the time when the foregoing effect is obtained is expressed as "thermoplastic polymer composition may be stably produced". When the polyisobutylene is finely dispersed without locally existing within the composition, or forms a continuous phase depending upon its addition amount, there is a tendency that gas barrier properties of the resulting thermoplastic polymer composition, or extrusion molded articles or injection molded articles using the same, become high.

Whether or not the polyisobutylene (b) has been plasticized can be judged by visually confirming the matter that the amount of the polyisobutylene (b) supplied within the hopper is reduced.

The judgement on whether or not the polyisobutylene (b) has been plasticized is not particularly limited to the aforementioned method, but for example, it is possible to make the judgement only on whether or not the polyisobutylene (b) may be quantitatively supplied to the twin-screw extruder by the quantitative pump. Here, the terms "may be quantitatively supplied" refer to the matter that the polyisobutylene (b) may be supplied with a variation of $\pm$ 20% relative to a specified value (for example, specified parts by mass per hour), and refers to the matter that the polyisobutylene (b) may be supplied with a variation of preferably $\pm$10%, more preferably $\pm$7%, still more preferably $\pm$5%, and especially preferably $\pm$3%.

In the twin-screw/single-screw extruder, from the viewpoint of easily plasticizing the polyisobutylene (b), it is preferred to adopt the following condition.

(Condition of Twin-Screw/Single-Screw Extruder)

Number of revolution of screw: Preferably 40 $min^{-1}$ or less, more preferably 5 to 30 $min^{-1}$, still more preferably 5 to 20 $min^{-1}$, and especially preferably 5 to 10 $min^{-1}$ in each screw.

Rotation direction of screw: Counter-rotating

Kind of screw: Intermeshing type and conical type

Axial direction of screw: Oblique

Extrusion rate of polyisobutylene (b): Preferably 15 to 300 kg/hr, more preferably 20 to 250 kg/hr, still more preferably 20 to 150 kg/hr, yet still more preferably 20 to 100 kg/hr, especially preferably 20 to 60 kg/hr, and most preferably 20 to 40 kg/hr.

Temperature (within the barrel) of polyisobutylene (b): From the viewpoint of preventing degradation of the polyisobutylene (b) from occurring, preferably 200°C or lower, more preferably 100°C or lower, and still more preferably 60°C or lower; and preferably 0°C or higher, more preferably 10°C or higher, still more preferably 20°C or higher, and especially preferably 25°C or higher.

(Second Step)

As mentioned above, the second step is a step including the following step (i) and step (ii).

(i) A step of supplying the hydrogenated block copolymer (a) to a twin-screw extruder.
(ii) A step of supplying the polyisobutylene (b) plasticized in the first step to the twin-screw extruder via a quantitative pump and kneading the polyisobutylene (b) together with the hydrogenated block copolymer (a) supplied in the step (i).

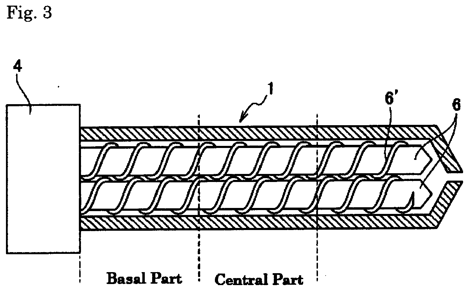

In the step (i), the hydrogenated block copolymer (a) is supplied to a twin-screw extruder. Though a place for supply is not particularly limited, it is preferably at least one of a hopper on the basal part side and a hopper on the central part side. As for the "basal part" and the "central part", as shown in Fig. 3, when a space of from a screw driving device 4 to a tip of the twin-screw extruder is divided into three approximately equal parts, a section of the side of the screw driving device 4 is referred to as the basal part, and the middle is referred to as the central part. When a hopper is equipped in the basal part, the foregoing hopper is referred to as the hopper on the basal part side, and when a hopper is equipped in the central part, the foregoing hopper is referred to as the hopper on the central part side.

An embodiment in which the hydrogenated block copolymer (a) is supplied from the hopper on the central part side is also preferred, and an embodiment in which the hydrogenated block copolymer (a) is supplied from the hopper on the basal part side is more preferred.

It is also possible to obtain a thermoplastic polymer composition containing other component together with the hydrogenated block copolymer (a) and the polyisobutylene (b). In this case, the other component may be supplied to the twin-screw extruder together with the hydrogenated block copolymer (a), or it may also be supplied from a hopper apart from the hopper from which the hydrogenated block copolymer (a) is supplied. The other component is mentioned later.

Here, in the case of using a component other than the hydrogenated block copolymer (a) and the polyisobutylene (b), the component other than the polyisobutylene (b) may be preliminarily mixed, as the need arises. As for a method of conducting preliminary mixing, there is exemplified a method of using a mixing machine, such as a Henschel mixer, a high-speed mixer, a V-blender, a ribbon blender, a tumbler blender, a conical blender, etc.

In the twin-screw extruder, from the viewpoint of kneading the hydrogenated block copolymer (a) and the polyisobutylene (b) with favorable dispersibility, it is preferred to adopt the following condition.

(Condition of Twin-Screw Extruder)

Number of revolution of screw: Preferably 50 to 1,700 $min^{-1}$, more preferably 100 to 700 $min^{-1}$, still more preferably 150 to 600 $min^{-1}$, and especially preferably 200 to 500 $min^{-1}$ in each screw.
Rotation direction of screw: Co-rotating
Ratio (L/D) of whole length (L) to diameter (D) of screw: Preferably 15 to 90, more preferably 20 to 80, still more preferably 30 to 70, and especially preferably 30 to 45.
Kind of screw: Intermeshing type
Axial direction of screw: Parallel
Extrusion rate of thermoplastic polymer composition: Preferably 15 to 1,500 kg/hr, more preferably 20 to 1,000 kg/hr, still more preferably 20 to 500 kg/hr, yet still more preferably 20 to 300 kg/hr, especially preferably 20 to 150 kg/hr, and most preferably 50 to 150 kg/hr, and even 80 to 120 kg/hr.
Setting temperature of cylinder: Preferably 150 to 300°C, more preferably 160 to 280°C, still more preferably 180 to 260°C, and especially preferably 180 to 230°C.

Temperature (within the barrel) of thermoplastic polymer composition: Preferably 300°C or lower, more preferably 280°C or lower, and still more preferably 260°C or lower; and more specifically, preferably 150 to 300°C, more preferably 180 to 280°C, still more preferably 180 to 260°C, and especially preferably 190 to 250°C.

In the step (ii), by supplying the polyisobutylene (b) plasticized in the first step to a quantitative pump and then quantitatively supplying it to the twin-screw extruder by the quantitative pump, the plasticized polyisobutylene (b) is kneaded together with the hydrogenated block copolymer (a) supplied in the step (i) by the twin-screw extruder, thereby obtaining the thermoplastic polymer composition.

Examples of the quantitative pump include a positive displacement pump and a non-positive displacement pump. From the viewpoint of preventing flowing backward from occurring on the occasion of stopping the pump, a positive displacement pump is preferred. Examples of the positive displacement pump include a positive displacement reciprocating pump, such as a plunger type pump, a piston type pump, etc.; a rotary positive displacement pump, such as a gear pump, etc.; and the like.

Among these, the quantitative pump is preferably a rotary positive displacement pump, and more preferably a gear pump.

An operation condition of the quantitative pump is not particularly limited so long as it is able to quantitatively supply the plasticized polyisobutylene (b) to the twin-screw extruder. For example, a discharge rate of the quantitative pump is preferably equal to the extrusion rate of the polyisobutylene (b) in the aforementioned twin-screw/single-screw extruder. A rotational speed of the quantitative pump is preferably 2 to 20 $min^{-1}$, more preferably 2 to 15 $min^{-1}$, still more preferably 2 to 10 $min^{-1}$, and especially preferably 4 to 10 $min^{-1}$.

In the step (ii), the polyisobutylene (b) plasticized in the first step is supplied preferably from at least one of a supply port on the basal part side and a supply port of the central part of the barrel of the twin-screw extruder, and more preferably from a supply port of the central part. Here, the "basal part" and the "central part" are those as mentioned above. When a supply port is equipped in the basal part, the foregoing supply port is referred to as the supply port on the basal part side, and when a supply port is equipped in the central part, the foregoing supply port is referred to as the supply port on the central part side.

Next, each of the components which are used for the production method of a thermoplastic polymer composition of the present invention is described.

<Hydrogenated Block Copolymer (a)>

Examples of the hydrogenated block copolymer (a) which is used in the present invention include a hydrogenated product of a block copolymer having a polymer block (A) containing a structural unit derived from an aromatic vinyl compound and a polymer block (B) containing a structural unit derived from a conjugated diene compound; and the like.

Examples of the aromatic vinyl compound include styrene, α-methylstyrene, o-methylstyrene, m-methylstyrene, p-methylstyrene, 1,3-dimethylstyrene, diphenylethylene, 1-vinylnaphthalene, 4-propylstyrene, 4-cyclohexylstyrene, 4-dodecylstyrene, 2-ethyl-4-benzylstyrene, 4-(phenylbutyl)styrene, and the like. Above all, styrene, α-methylstyrene, and p-methylstyrene are preferred, and styrene is more preferred.

Examples of the conjugated diene compound include 1,3-butadiene, isoprene, 2,3-dimethyl-1,3-butadiene, 1,3-pentadiene, 1,3-hexadiene, and the like. Above all, at least one selected from these compounds is preferred, at least one selected from 1,3-butadiene and isoprene is more preferred, and isoprene is still more preferred.

From the viewpoints of heat resistance and weather resistance, the hydrogenated block copolymer (a) is one resulting from hydrogenation of a part or the whole of carbon-carbon double bonds based on a conjugated diene compound unit in the total polymer blocks (B). The carbon-carbon double bonds based on a conjugated diene compound unit in the total polymer blocks (B) are hydrogenated in a rate of preferably 70% or more, more preferably 80% or more, still more preferably 85% or more, especially preferably 90% or more, and most preferably 95% or more. An upper limit of the hydrogenation rate is not particularly limited, and it may be 100%, may be 99%, or may be 98%. The hydrogenation rate is sometimes described as "hydrogenation rate of the hydrogenated block copolymer (a)".

In the present specification, the hydrogenation rate of the hydrogenated block copolymer (a) is a value determined by the method described in the Examples.

The content of the polymer block (A) in the hydrogenated block copolymer (a) is preferably 5 to 70% by mass, more preferably 10 to 65% by mass, still more preferably 20 to 60% by mass, especially preferably 25 to 50% by mass, and most preferably 25 to 40% by mass. When the content of the polymer block (A) is 5% by mass or more, there is a tendency that mechanical characteristics of the resulting thermoplastic polymer composition become favorable; and in addition, a favorable compression set at a high temperature is obtained, and there is a tendency that the resulting thermoplastic polymer composition is also excellent in heat resistance. When the content of the polymer block (A) is 70% by mass or less, the melt viscosity of the hydrogenated block copolymer (a) does not become excessively high, there is a tendency that melt mixing with other component becomes easy, and furthermore, there is a tendency that flexibility of the resulting thermoplastic polymer composition is excellent. The content of the polymer block (A) in the hydrogenated block copolymer (a) is a value determined by the method described in the Examples.

A bonding mode between the polymer block (A) and the polymer block (B) in the hydrogenated block copolymer (a) may be a linear form, a branched form, a radial form, or an arbitrary combination of these forms. Above all, a linear form, a branched form, or a combination thereof is preferred.

When the polymer block (A) is expressed as "A", and the polymer block (B) is expressed as "B", examples of the hydrogenated block copolymer (a) include an A-B type diblock copolymer, an A-B-A type triblock copolymer, an A-B-A-B type tetrablock copolymer, an (A-B)$_n$X type copolymer (X represents a coupling agent residue, and n represents an integer of 3 or more), and the like. The block copolymer of such a bonding mode may be used either alone or in combination of two or more thereof. Above all, the hydrogenated block copolymer (a) is preferably an A-B-A type triblock copolymer or a mixture of an A-B-A type triblock copolymer and an A-B type diblock copolymer.

(More Preferred Embodiment of Hydrogenated Block Copolymer (a))

The hydrogenated block copolymer (a) is preferably a hydrogenated block copolymer that is a hydrogenated product of a block copolymer having a polymer block (A) containing a structural unit derived from an aromatic vinyl compound and a polymer block (B) containing a structural unit derived from isoprene or a structural unit derived from a mixture of isoprene and butadiene and having a total content (vinyl bond content) of a 3,4-bond unit and a 1,2-bond unit of 45% or more, the hydrogenated block copolymer having a peak top molecular weight (Mp) of 50,000 to 500,000 expressed in terms of standard polystyrene as determined by gel permeation chromatography.

In the present specification, the 3,4-bond unit and the 1,2-bond unit in the structural unit derived from isoprene and the 1,2-bond unit in the structural unit derived from butadiene are referred to as "vinyl bond unit", respectively, and the total content thereof is referred to as "vinyl bond content".

The polymer block (A) of the hydrogenated block copolymer (a) contains mainly a structural unit derived from an aromatic vinyl compound (aromatic vinyl compound unit). The term "mainly" as referred to herein means that the aromatic vinyl compound unit is preferably 90% by mass or more, more preferably 95% by mass or more, and still more preferably 100% by mass on the basis of the mass of the polymer block (A).

Examples of the aromatic vinyl compound constituting the polymer block (A) include styrene, α-methylstyrene, β-methylstyrene, o-methylstyrene, m-methylstyrene, p-methylstyrene, 4-t-butylstyrene, 2,4-dimethylstyrene, 2,4,6-trimethylstyrene, monofluorostyrene, difluorostyrene, monochlorostyrene, dichlorostyrene, methoxystyrene, vinylnaphthalene, vinylanthracene, and the like.

The polymer block (A) may include only a structural unit derived from one kind of the aforementioned aromatic vinyl compounds, or may include structural units derived from two or more kinds thereof. Above all, it is preferred that the polymer block (A) is constituted mainly of a structural unit of styrene. The term "mainly" as referred to herein means that the structural unit derived from styrene is preferably 90% by mass or more, more preferably 95% by mass or more, and still more preferably 100% by mass on the basis of the mass of the polymer block (A).

The polymer block (A) may contain a small amount of a structural unit derived from other copolymerizable monomer together with the structural unit derived from the aromatic vinyl compound. At this time, a proportion of the structural unit derived from the other copolymerizable monomer is preferably 10% by mass or less, and more preferably 5% by mass or less on the basis of the mass of the polymer block (A). Examples such other copolymerizable monomer include copolymerizable monomers which may be subjected to ionic polymerization, such as 1-butene, pentene, hexene, butadiene, isoprene, methyl vinyl ether, etc. In the case of containing the structural unit derived from the other copolymerizable monomer together with the structural unit derived from the aromatic vinyl compound, the bonding mode thereof may be either a random form or a tapered form.

From the viewpoints of visual transparency, damping properties, molding processability, compression set at a high temperature, and oxygen gas barrier properties, it is preferred that the polymer block (B) which the hydrogenated block copolymer (a) has contains mainly a structural unit derived from isoprene or a structural unit derived from a mixture of isoprene and butadiene. The term "mainly" as referred to herein means that the structural unit derived from isoprene alone or a mixture of isoprene and butadiene is preferably 90% by mass or more, more preferably 95% by mass or more, and still more preferably 100% by mass on the basis of the mass of the polymer block (B).

In the case where the polymer block (B) contains mainly a structural unit derived from isoprene, the structural unit contains a 2-methyl-2-butene-1,4-diyl group [$-CH_2-C(CH_3)=CH-CH_2-$; 1,4-bond unit], an isopropenylethylene group [$-CH(C(CH_3)=CH_2)-CH_2-$; 3,4-bond unit], and a 1-methyl-1-vinylethylene group [$-C(CH_3)(CH=CH_2)-CH_2-$; 1,2-bond unit]. In the total structural unit of the polymer block (B), it is desired that the vinyl bond content is 45 mol% or more. The vinyl bond content is preferably 47 mol% or more, more preferably 50 mol% or more, and still more preferably 53 mol% or more. Though an upper limit of the vinyl bond content is not particularly limited, in general, it is preferably 95 mol% or less, more preferably 90 mol% or less, still more preferably 80 mol% or less, and especially preferably 70 mol% or less. In the light of the above, the vinyl bond content is preferably 47 to 90 mol%, more preferably 50 to 90 mol%, still more preferably 50 to 80 mol%, yet still more preferably 50 to 70 mol%, even yet still more preferably 53 to 90 mol%, even still more preferably 53 to 80 mol%, and even still more further preferably 53 to 70 mol%.

When the vinyl bond content falls within such a range, the molding processability (fluidity) of the resulting thermoplastic polymer composition is excellent, and there is a tendency that gas barrier properties of a molded body obtained from the foregoing thermoplastic copolymer composition are improved.

In the present specification, the vinyl bond content is a value determined through measurement of $^1$H-NMR spectrum according to the method described in the Examples.

In the case where the polymer block (B) contains mainly a structural unit derived from a mixture of isoprene and butadiene, the structural unit contains a 2-methyl-2-butene-1,4-diyl group, an isopropenylethylene group, and a 1-methyl-1-vinylethylene group, each of which is derived from isoprene, as well as a 2-butene-1,4-diyl group [$-CH_2-CH=CH-CH_2-$; 1,4-bond unit] and a vinylethylene group [$-CH(C=CH)-CH_2-$; 1,2-bond unit], each of which is derived from butadiene. In the present invention, in the total structural unit of the polymer block (B), it is necessary that the vinyl bond content is 45 mol% or more. The vinyl bond content is preferably 47 mol% or more, more preferably 50 mol% or more, and still more preferably 53 mol% or more. Though an upper limit of the vinyl bond content is not particularly limited, in general, it is preferably 95 mol% or less, more preferably 90 mol% or less, still more preferably 80 mol% or less, and especially preferably 70 mol% or less. In the light of the above, the vinyl bond content is preferably 47 to 90 mol%, more preferably 50 to 90 mol%, still more preferably 50 to 80 mol%, yet still more preferably 50 to 70 mol%, even yet still more preferably 53 to 90 mol%, even still more preferably 53 to 80 mol%, and even still more further preferably 53 to 70 mol%.

In the foregoing copolymer block, the bonding mode of the structural unit derived from isoprene and the structural unit derived from butadiene may be any of a random form, a block form, and a tapered form.

In the case where the polymer block (B) is composed of the structural unit derived from the mixture of isoprene and butadiene, from the viewpoints of transparency, damping properties, and molding processability as well as keeping oxygen gas barrier properties favorable, a proportion of the "structural unit derived from isoprene" to the "sum total of the structural unit derived from isoprene and the structural unit derived from butadiene" is preferably 10 mol% or more, more preferably 30 mol% or more, and still more preferably 40 mol% or more.

The polymer block (B) may contain a small amount of a structural unit derived from other copolymerizable monomer together with the structural unit derived from isoprene or the structural unit derived from isoprene and butadiene. At this time, a proportion of the structural unit derived from the other copolymerizable monomer is preferably 30% by mass or less, more preferably 10% by mass or less, and still more preferably 5% by mass or less on the basis of the mass of the polymer block (B). Examples of such other copolymerizable monomer include copolymerizable monomers which may be subjected to anionic polymerization, such as aromatic vinyl compounds, e.g., styrene, α-methylstyrene, o-methylstyrene, m-methylstyrene, p-methylstyrene, 1,3-dimethylstyrene, diphenylethylene, 1-vinylnaphthalene, 4-propylstyrene, 4-cyclohexylstyrene, 4-dodecylstyrene, 2-ethyl-4-benzylstyrene, 4-(phenylbutyl)styrene, etc. Such other copolymerizable monomer may be used alone, or may be used in combination of two or more thereof. In the case where the polymer block (B) has the structural unit derived from the aforementioned other copolymerizable monomer in addition the structural unit derived from isoprene or the structural unit derived from isoprene and butadiene, the bonding mode thereof may be either a random form or a tapered form.

The hydrogenated block copolymer (a) may have one or more functional groups, such as a carboxyl group, a hydroxyl group, an acid anhydride group, an amino group, an epoxy group, etc., in a molecular chain and/or a molecular end.

The hydrogenated block copolymer (a) is a hydrogenated product of a block copolymer including at least one of each of the polymer block (A) and the polymer block (B). The hydrogenated block copolymer (a) is preferably a hydrogenated product of a block copolymer including two or more of the polymer block (A) and one or more of the polymer block (B). Though a bonding mode between the polymer block (A) and the polymer block (B) is not particularly limited and may be any bonding mode in a linear form, a branched form, a radial form, or a combination of two or more thereof, it is preferably a bonding mode in a linear form. When the polymer block (A) is expressed as "A", and the polymer block (B) is expressed as "B", the bonding mode is preferably $(A-B)_1$, $A-(B-A)m$, or $B-(A-B)_n$ (in the formulae, l, m, and n each independently represent an integer of 1 or more); and from the viewpoints of rubber elasticity, dynamic characteristics, handling properties, and so on, the bonding mode is more preferably a bonding mode expressed by $(A-B)_1$ or $A-(B-A)_m$, and still more preferably a bonding mode of a diblock structure expressed by A-B or a triblock structure expressed by A-B-A.

In the case where the hydrogenated block copolymer (a) has two or more of the polymer block (A) or two or more of the polymer block (B), the respective polymer blocks (A) and the respective polymer blocks (B) may be each a block of the same constitution as each other or a different constitution from each other. For example, as for the two polymer blocks (A) in the triblock structure expressed by [A-B-A], the kinds of the aromatic vinyl compounds constituting them may be the same as each other, or may be different from each other.

In the hydrogenated block copolymer (a), a peak top molecular weight (Mp) of the polymer block (A) is preferably 10,000 to 60,000, more preferably 15,000 to 45,000, and still more preferably 20,000 to 40,000. A peak top molecular weight of the polymer block (B) in a state before the hydrogenation is preferably 130,000 to 450,000, and more preferably 180,000 to 430,000.

A peak top molecular weight (Mp) of the whole of the hydrogenated block copolymer (a) in a state after the hydrogenation is preferably 50,000 to 500,000, more preferably 70,000 to 400,000, still more preferably 70,000 to 350,000, yet still more preferably 80,000 to 350,000, especially preferably 150,000 to 350,000, and most preferably 200,000 to 330,000; and it may be 250,000 to 330,000 or may also be 280,000 to 330,000. When the peak top molecular weight (Mp) of the hydrogenated block copolymer (a) falls within the aforementioned range, there is a tendency that the powdered hydrogenated block copolymer (a) having a bulk density of 0.10 to 0.40 g/mL is readily obtained. Furthermore, the resulting thermoplastic polymer composition is excellent in compression set at a high temperature.

The peak top molecular weight (Mp) is a value expressed in terms of standard polystyrene as determined by the gel permeation chromatography (GPC) method.

Though the hydrogenated block copolymer (a) is not particularly limited, it is preferably a powder having a bulk density of 0.10 to 0.40 g/mL, and more preferably a powder having a bulk density of 0.15 to 0.35 g/mL. When the bulk density is 0.10 g/mL or more, there is a tendency that the handling properties become favorable, whereas when it is 0.40 g/mL or less, mixing with the polyisobutylene (b) becomes easy, and the desired physical properties and characteristics are readily obtained. The bulk density as referred to in the present specification is a value calculated in such a manner that the weighed powdered hydrogenated block copolymer (a) is charged in a graduated cylinder, its volume is measured, and the mass of the hydrogenated block copolymer (a) is then divided by the volume.

Such a hydrogenated block copolymer (a) can be, for example, produced by referring to the method described in paragraphs [0026] to [0030] of WO 2011/040585 A.

<Polyisobutylene (b)>

The polyisobutylene (b) which is used in the present invention is a polyisobutylene having a peak top molecular weight (Mp) of 5,000 to 80,000 expressed in terms of standard polystyrene as determined by gel permeation chromatography. By using the foregoing polyisobutylene (b), there is a tendency that gas barrier properties and water vapor barrier properties of the resulting thermoplastic polymer composition are improved.

As for the foregoing polyisobutylene (b), even when heated, its stickiness is very high, and because of the stickiness, heretofore, it was extremely difficult to supply the polyisobutylene (b) to the hydrogenated block copolymer (a) and blend the mixture. Even under such a situation, from the viewpoint of improving the gas barrier properties and water vapor barrier properties, there was a case where the polyisobutylene (b) must be used.

Even as for the polyisobutylene (b) that is extremely difficult in handling as mentioned above, according to the production method of the present invention, it has become easy to supply it to the hydrogenated block copolymer (a) and blend the mixture.

From the viewpoints of gas barrier properties and water vapor barrier properties, the Mp of the polyisobutylene (b) is preferably 5,000 to 80,000, more preferably 10,000 to 80,000, still more preferably 20,000 to 70,000, especially preferably 30,000 to 70,000, and most preferably 30,000 to 60,000.

As the polyisobutylene (b), commercially available products may be used, and examples thereof include "Tetrax (registered trademark)" Series, manufactured by JX Energy Corporation, and the like.

From the viewpoints of production stability and dynamic physical properties and heat resistance of the resulting thermoplastic polymer composition, a kinematic viscosity at 200°C of the polyisobutylene (b) is preferably 10 to 500,000 $mm^2/s$, more preferably 100 to 100,000 $mm^2/s$, still more preferably 1,000 to 70,000 $mm^2/s$, yet still more preferably 5,000 to 50,000 $mm^2/s$, especially preferably 7,000 to 35,000 $mm^2/s$, and most preferably 12,000 to 35,000 $mm^2/s$.

In the case where the kinematic viscosity at 200°C is 10 $mm^2/s$ or more, the viscosity of the polyisobutylene (b) does not become excessively low, and therefore, it becomes easy to suppress the matter that the polyisobutylene (b) cannot be quantitatively supplied to the twin-screw extruder in the step (ii) of the second step, and there is a tendency that the dynamic physical properties and heat resistance of the resulting thermoplastic polymerizable composition become favorable. In addition, in the case that the kinematic viscosity at 200°C is 500,000 $mm^2/s$ or less, the viscosity does not become excessively high; necessity of heating the polyisobutylene (b) in the first step is not generated, so that thermal degradation of the polyisobutylene (b) may be avoided; and there is a tendency that the dynamic physical properties and heat resistance of the resulting thermoplastic polymerizable composition may be made favorable.

Though there is no particular limitation, the kinematic viscosity can be measured in conformity with JIS K2283 (2000).

A blending amount of the polyisobutylene (b) is preferably 10 to 500 parts by mass, more preferably 15 to 400 parts by mass, still more preferably 20 to 300 parts by mass, yet still more preferably 25 to 200 parts by mass, especially preferably 25 to 150 parts by mass, and most preferably 25 to 80 parts by mass based on 100 parts by mass of the hydrogenated block copolymer (a).

<Other Component>

In the present invention, the thermoplastic polymer composition may be produced using, in addition to the aforementioned hydrogenated block copolymer (a) and polyisobutylene (b), other component, as the need arises. Specifically, in the step (i) of the second step, the other component may be supplied to the twin-screw extruder together with the hydrogenated block copolymer (a). On that occasion, the hydrogenated block copolymer (a) and the other component may be supplied to the twin-screw extruder from the same hopper, or may be supplied from a different hopper from each other.

Examples of the other component may include a polyolefin resin, a softening agent, a lubricant, an antioxidant, a heat stabilizer, a light-resistant agent, a weather-resistant agent, a metal deactivator, a UV absorber, a light stabilizer, a copper inhibitor, a filler, a reinforcing agent, an antistatic agent, an antibacterial agent, an antifungal agent, a dispersant, a coloring agent, an isobutylene·isoprene copolymer, a rubber, such as a silicone rubber, etc., an ethylene·vinyl acetate copolymer, a thermoplastic resin, such as an ABS (acrylonitrile-butadiene-styrene copolymer) resin, etc., and the like, and at least one selected from the group consisting of these materials is preferred. In particular, at least one selected from the group consisting of a polyolefin resin and a softening agent is more preferred.

(Polyolefin Resin)

From the viewpoint of moldability of the resulting thermoplastic polymer composition or the like, among those other components, a polyolefin resin is preferably used. Namely, in the aforementioned step (i), an embodiment of further supplying the polyolefin resin to the twin-screw extruder is one of the preferred embodiments.

Examples of the polyolefin resin include polyethylene, such as high-density polyethylene, medium-density polyethylene, low-density polyethylene, linear low-density polyethylene, etc., a homopolymer of propylene, such as homopolypropylene, etc., a block copolymer of propylene and ethylene (hereinafter abbreviated as "block polypropylene"), a random copolymer of propylene and ethylene (hereinafter abbreviated as "random polypropylene"), a copolymer of propylene or ethylene and an $\alpha$-olefin, and the like. Examples of the $\alpha$-olefin include $\alpha$-olefins having a carbon number of 20 or less, such as 1-butene, 1-pentene, 3-methyl-1-butene, 1-hexene, 3-methyl-1-pentene, 4-methyl-1-pentene, 1-heptene, 1-octene, 1-nonene, 1-decene, 1-dodecene, 1-tetradecene, 1-hexadecene, 1-octadecene, 1-eicosene, etc., and these compounds may be used alone, or may be used in combination of two or more thereof.

The polyolefin resin may also be a modified material thereof. Examples thereof include a modified polyolefin resin obtained through graft copolymerization of a polyolefin resin with a modifier; a modified polyolefin resin obtained through copolymerization of a main chain with a modifier on the occasion of production of a polyolefin resin; and the like. Examples of the modifier include unsaturated dicarboxylic acids, such as maleic acid, citraconic acid, a halogenated maleic acid, itaconic acid, cis-4-cyclohexene-1,2-dicarboxylic acid, endo-cis-bicyclo[2.2.1]-5-heptene-2,3-dicarboxylic acid, etc.; esters, amides, or imides of an unsaturated dicarboxylic acid; unsaturated dicarboxylic acid anhydrides, such as maleic anhydride, citraconic anhydride, a halogenated maleic anhydride, itaconic anhydride, cis-4-cyclohexane-1,2-dicarboxylic acid anhydride, endo-cis-bicyclo[2.2.1]-5- heptene-2,3-dicarboxylic acid anhydride, etc.; unsaturated monocarboxylic acids, such as acrylic acid, methacrylic acid, crotonic acid, etc.; unsaturated monocarboxylic acid esters (e.g., methyl acrylate, ethyl acrylate, methyl methacrylate, ethyl methacrylate, etc.), amides, or imides; and the like.

Though the polyolefin resin may be a non-modified polyolefin resin, or may be a modified polyolefin resin, it is preferably a non-modified polyolefin resin.

Among the aforementioned polyolefin resins, from the viewpoint of moldability of the resulting thermoplastic polymer composition, homopolypropylene, block polypropylene, and random polypropylene are preferred. Furthermore, from the viewpoint of flexibility, random polypropylene and block polypropylene are more preferred; and from the viewpoint of transparency, homopolypropylene and random polypropylene are more preferred, and random polypropylene is still more preferred.

Though a melt flow rate (MFR) under a condition at 230°C and 21.6 N of the polyolefin resin is not particularly limited, from the viewpoint of moldability, it is preferably 0.1 to 70 g/10 min, and more preferably 1 to 30 g/10 min. In particular, in the case of undergoing extrusion molding, the melt flow rate is preferably 0.1 to 30 g/10 min, more preferably 1 to 20 g/10 min, and still more preferably 1 to 10 g/10 min, and in the case of undergoing injection molding, the melt flow rate is preferably 1 to 70 g/10 min, more preferably 1 to 60 g/10 min, and still more preferably 1 to 30 g/10 min.

Though a melting point of the polyolefin resin is not particularly limited, it is preferably 120 to 180°C, and more preferably 120 to 170°C. Here, the melting point is a peak top temperature of an endothermic peak measured on the occasion when a fused sample obtained by heating from 30°C to 250°C at a temperature rise rate of 10°C/min using a differential scanning calorimeter (DSC) "TGA/DSC1 Star System" (manufactured by Mettler Toledo) is cooled from 250°C to 30°C at a temperature drop rate of 10°C/min, and then, the temperature is again raised from 30°C to 250°C at a temperature rise rate of 10°C/min.

In the case of using the polyolefin resin, a blending amount of the polyolefin resin is preferably 1 to 200 parts by mass, more preferably 5 to 180 parts by mass, still more preferably 5 to 150 parts by mass, yet still more preferably 5 to 100 parts by mass, especially preferably 5 to 70 parts by mass, and most preferably 5 to 50 parts by mass based on 100 parts by mass of the hydrogenated block copolymer (a), and it may also be 10 to 30 parts by mass. When the content of the polyolefin resin is 1 part by mass or more, there is a tendency that the mechanical strength of the resulting thermoplastic polymer composition is improved, and in addition, there is a tendency that moldability of injection molding, blow molding, or the like is excellent. When the content of the polyolefin resin is 200 parts by mass or less, the flexibility of the resulting thermoplastic polymer composition becomes favorable, and furthermore, there is a tendency that the compression set at a high temperature is excellent.

(Softening Agent)

By using a softening agent, flexibility, molding processability, and so on may be further improved. The softening agent is a softening agent other than the aforementioned polyisobutylene (b), and examples thereof include paraffin-based, naphthene-based, or aromatic process oils; phthalic acid derivatives, such as dioctyl phthalate, dibutyl phthalate, etc.; white oil; mineral oil; a liquid cooligomer between ethylene and an α-olefin; liquid paraffin; polybutene; liquid polydienes, such as liquid polybutadiene, liquid polyisoprene, a liquid poly(isoprene-butadiene) copolymer, a liquid poly(styrene-butadiene) copolymer, a liquid poly(styrene-isoprene) copolymer, etc., and hydrogenated products thereof; and the like. These may be used alone, or may be used in combination of two or more thereof.

(Physical Properties and Characteristics of Thermoplastic Polymer Composition)

In the thermoplastic polymer composition obtained by the production method of the present invention, its hardness (JIS-A) measured according to the method described in the Examples is 20 to 95, in detail 20 to 85, and in more detail 30 to 80, and it may also be adjusted to 40 to 60.

Similarly, a tensile strength at break measured according to the method described in the Examples is 1 to 40 MPa, in detail 3 to 30 MPa, and in more detail 4 to 10 MPa. In addition, a tensile elongation at break measured according to the method described in the Examples is 100 to 900%, in detail 200 to 800%, in more detail 400 to 800%, and in still more detail 600 to 750%. Accordingly, the thermoplastic polymer composition obtained by the production method of the present invention is excellent in mechanical characteristics.

Furthermore, the thermoplastic polymer composition obtained by the production method of the present invention is also excellent in heat resistance.

[Molded Body]

The thermoplastic polymer composition obtained by the production method of the present invention may be, for example, formed into a sheet, a film, a tube, a hollow molded body, a die molded body, or other various molded bodies by adopting a conventionally known method, such as extrusion molding, injection molding, blow molding, compression molding, press molding, calendar molding, etc.

Furthermore, the thermoplastic polymer composition may also be complexed with other member (for example, a polymer material, such as polyethylene, polypropylene, an olefin-based elastomer, an ABS (acrylonitrile-butadiene-styrene copolymer) resin, a polyamide, etc., a metal, a wood, a cloth, a nonwoven fabric, a stone, etc.). The complex may be produced by a method, such as heat fusion, solvent adhesion, ultrasonic adhesion, dielectric adhesion, laser adhesion, etc.

The molded body is excellent in mechanical characteristics and heat resistance.

Examples

The present invention is hereunder described in more detail by reference to Examples, but it should be construed that the present invention is by no means limited by these Examples. Evaluations of physical properties and characteristics were conducted by the following methods.

(1) Content of Polymer Block (A) in Hydrogenated Block Copolymer

The block copolymer (a) after hydrogenation was dissolved in $CDCl_3$ and measured for a $^1$H-NMR spectrum [device: JNM-Lambda 500 (manufactured by JEOL Ltd.), measurement temperature: 50°C], and the content of the polymer block (A) was calculated from a peak intensity originated in styrene.

(2) Peak Top Molecular Weight (Mp)

With respect to each of the polymer blocks (A) and (B) before hydrogenation, the hydrogenated block copolymer (a) after hydrogenation, and the polyisobutylene (b), the peak top molecular weight (Mp) expressed in terms of polystyrene was determined through the measurement of gel permeation chromatography (GPC).

Instrument: Gel permeation chromatograph "HLC-8020" (manufactured by Tosoh Corporation)
Column: Two columns of G4000HXL (manufactured by Tosoh Corporation)
Eluting solution: Tetrahydrofuran, flow rate: 1 mL/min
Injection amount: 150 µL
Concentration: 5 mg/10 mL (block copolymer/tetrahydrofuran)
Column temperature: 40°C
Calibration curve: Prepared using standard polystyrene
Detection method: Differential refractive index (RI)

(3) Hydrogenation Rate of Hydrogenated Block Copolymer (a)

An iodine value of the block copolymer before and after hydrogenation was measured, and using the measured value, a hydrogenation rate (%) of the hydrogenated block copolymer (a) was calculated according to the following formula.

$$\text{Hydrogenation rate (\%)} = [1 - \{(\text{iodine value of block copolymer after hydrogenation})/(\text{iodine value of block copolymer before hydrogenation})\}] \times 100$$

(Measurement method of iodine value)

Using a cyclohexane solution of the block copolymer before and after hydrogenation, the iodine value was measured by the Wijs method.

(4) Vinyl Bond Content of Polymer Block (B)

The block copolymer before hydrogenation was dissolved in $CDCl_3$ and measured for a $^1$H-NMR spectrum [device: JNM-Lambda 500 (manufactured by JEOL Ltd.), measurement temperature: 50°C], and from a ratio of a total peak area of a structural unit derived from isoprene and peak areas corresponding to a 3,4-bond unit and a 1,2-bond unit in the isoprene structural unit, the vinyl bond content (a sum of the contents of the 3,4-bond unit and the 1,2-bond unit) was calculated.

(5) Hardness (JIS-A)

The JIS-A hardness was measured using a Type A durometer in conformity with JIS K6253 (2012).

(6) Mechanical Characteristics (Tensile Strength at Break and Tensile Elongation at Break)

A 2 mm-thick test piece having a DIN No. 3 dumbbell shape in conformity with JIS K6251 (2010) was prepared, and using this test piece, the breaking strength and the breaking elongation were measured under a condition at a temperature of 23°C and a tensile rate of 500 mm/min.

(7) Heat Resistance

A compression set after allowing a sample to stand at 70°C for 22 hours in an amount of compression deformation of 25% was measured in conformity with JIS K6262 (2013) and employed as an index for the heat resistance. When the compression set is 85% or less, it may be said that the sample is excellent in heat resistance, and the compression set is preferably 70% or less, and more preferably 50% or less.

(8) Production Easiness

The case where the production of the thermoplastic polymer composition is easy was evaluated as "A", and the case where the production of the thermoplastic polymer composition is difficult was evaluated as "C".

(9) Production Stability

During a continuous operation of 2 hours, sampling of 4 times was conducted at intervals of 30 minutes, and a blending amount of the polyisobutylene (b) relative to the hydrogenated block copolymer (a) was calculated under the following condition by means of gel permeation chromatography, thereby evaluating the production stability of the thermoplastic polymer composition.

Specifically, in all the samples obtained by sampling of 4 times, the case where the blending amount of the polyisobutylene (b) based on 100 parts by mass of the hydrogenated block copolymer (a) falls within $\pm 20\%$ of the target blending amount (namely, 50 parts by mass or 100 parts by mass) was evaluated as "A" (the production stability is high), and the case where the blending amount of the polyisobutylene (b) does not fall within the aforementioned range even in one point was evaluated as "C" (the production stability is low).

(Condition)

Instrument: Gel permeation chromatograph "HLC-8020" (manufactured by Tosoh Corporation)
Column: Two columns of G4000HXL (manufactured by Tosoh Corporation)
Eluting solution: Tetrahydrofuran, flow rate: 1 mL/min
Injection amount: 150 μL
Concentration: 5 mg/10 mL (thermoplastic polymer composition/tetrahydrofuran)
Column temperature: 40°C
Calibration curve: Prepared using standard polystyrene
Detection method: Differential refractive index (RI)

(Calculation Formula of Blending Amount of Polyisobutylene (b))

First of all, a calibration curve was prepared by measuring three points where the amount of the hydrogenated block copolymer (a) was 100 parts by mass, and the amount of the polyisobutylene (b) was 40 parts by mass, 50 parts by mass, and 60 parts by mass, respectively. From a formulation obtained from the foregoing calibration curve: Area proportion (%) of hydrogenated block copolymer (a) = 1.2895 $\times$ {mass proportion (%) of hydrogenated block copolymer (a)} - 20.261}, the following calculation formula was determined.

EP 3 339 353 B1

$$\text{Mass proportion (\%) of hydrogenated block copolymer (a) in thermoplastic polymer composition} = \{\text{area proportion (\%) of hydrogenated block copolymer (a)}\} \times 0.775 + 15.71$$

From the mass proportion of the hydrogenated block copolymer (a) in the thermoplastic polymer composition as determined by the aforementioned calculation formula, the blending amount of the polyisobutylene (b) based on 100 parts by mass of the hydrogenated block copolymer (a) was calculated.

[Respective Components Used in the Examples]

Details or production methods of the respective components used in the Examples and Comparative Examples are shown below. In addition, physical properties values of the respective components are summarized in Tables 1 to 3.

[Hydrogenated Block Copolymer (a)]

    (a)-1: Hydrogenated product of styrene-isoprene-styrene block copolymer, vinyl bond content: 55.2%
    (a)-2: Hydrogenated product of styrene-isoprene-styrene block copolymer, vinyl bond content: 58.2%

The production method of each of the hydrogenated block copolymer (a)-1 and the hydrogenated block copolymer (a)-2 are as follows.

[Production Example 1] Production of Hydrogenated Block Copolymer (a)-1

In a nitrogen-purged, dried pressure-resistant container, 55.8 kg of cyclohexane as a solvent and 45 mL of sec-butyllithium (10% by mass cyclohexane solution) (sec-butyllithium: 3.5 g) as an anionic polymerization initiator were charged, and 305 g tetrahydrofuran as a Lewis base was then charged. After the temperature was raised to 60°C, 1.84 kg of styrene (1) was added to conduct polymerization for 1 hour; subsequently, 8.57 kg of isoprene was added to conduct polymerization for 2 hours; and 1.84 kg of styrene (2) was further added to conduct polymerization for 1 hour, thereby obtaining a reaction liquid containing a polystyrene-polyisoprene-polystyrene triblock copolymer.
To this reaction liquid, palladium on carbon (supporting amount of palladium: 5% by mass) as a hydrogenation catalyst was added in an amount of 5% by mass relative to the aforementioned block copolymer, and the contents were allowed to react with each other for 10 hours under a condition at a hydrogen pressure of 2 MPa and 150°C.
After allowing to cool and pressure discharge, the palladium on carbon was removed by means of filtration, the filtrate was concentrated, and the resultant was further vacuum dried, thereby obtaining a hydrogenated product of a polystyrene-polyisoprene-polystyrene triblock copolymer (hereinafter referred to as "hydrogenated block copolymer (a)-1"). With respect to the hydrogenated block copolymer (a)-1, the aforementioned measurements of physical properties were conducted. The results are shown in Table 1.

[Production Example 2] Production of Hydrogenated Block Copolymer (a)-2

The polymerization reaction, hydrogenation reaction, catalyst removal, and drying were conducted in the same methods as in Production Example 1, except that 55.8 kg of cyclohexane as the solvent, 65 mL of sec-butyllithium (10% by mass cyclohexane solution) (sec-butyllithium: 5.1 g) as the initiator, 312 g of tetrahydrofuran as the Lewis base, and 2.02 kg of styrene (1), 9.90 kg of isoprene, and 2.02 kg of styrene (2) as monomers to be polymerized were successively added and polymerized, thereby obtaining a hydrogenated product of a polystyrene-polyisoprene-polystyrene triblock copolymer (hereinafter referred to as "hydrogenated block copolymer (a)-2"). With respect to the resulting hydrogenated block copolymer (a)-2, the aforementioned measurements of physical properties were conducted. The results are shown in Table 1.

13

Table 1

|  |  | Production Example 1 | Production Example 2 |
|---|---|---|---|
|  |  | (a)-1 | (a)-2 |
| Use amount | Cyclohexane [kg] | 55.8 | 55.8 |
|  | sec-Butyllithium [mL] | 45 | 65 |
|  | Styrene (1) [kg] | 1.84 | 2.02 |
|  | Styrene (2) [kg] | 1.84 | 2.02 |
|  | Isoprene [kg] | 8.57 | 9.90 |
|  | Tetrahydrofuran [kg] | 0.305 | 0.312 |
| Content of polymer block (A) (% by mass) | | 29.4 | 28.5 |
| Content of triblock copolymer (% by mass) | | 100 | 100 |
| Physical properties | Peak top molecular weight of hydrogenated block copolymer (a) | 315,000 | 225,000 |
|  | Peak top molecular weight of polymer block (A) | 37,500 | 26,000 |
|  | Hydrogenation rate (%) | 97.2 | 97.0 |
|  | Vinyl bond content of polymer block (B) (mol%) | 55.2 | 58.2 |

[Polyisobutylene (b)]

Polyisobutylene (b)-1: "Tetrax (registered trademark) Grade 3T", Mp = 35,100, manufactured by JX Energy Corporation

Polyisobutylene (b)-2: "Tetrax (registered trademark) Grade 4T", Mp = 41,400, manufactured by JX Energy Corporation

Polyisobutylene (b)-3: "Tetrax (registered trademark) Grade 5T", Mp = 50,300, manufactured by JX Energy Corporation

Polyisobutylene (b)-4: "Tetrax (registered trademark) Grade 6T", Mp = 56,100, manufactured by JX Energy Corporation

Table 2

| Polyisobutylene (b) | (b)-1 | (b)-2 | (b)-3 | (b)-4 |
|---|---|---|---|---|
| Tetrax | Grade 3T | Grade 4T | Grade 5T | Grade 6T |
| Peak top molecular weight (Mp) | 35,100 | 41,400 | 50,300 | 56,100 |
| Kinematic viscosity ($mm^2/s$) (at 200°C) - Catalog value | 6,500 | 16,500 | 30,500 | 50,500 |

[Polyolefin Resin]

Polyolefin resin 1: "Prime Polypro (registered trademark) F327" (manufactured by Prime Polymer Co., Ltd.), propylene-ethylene random copolymer, MFR = 7 g/10 min (at 230°C), melting point: 138°C

Polyolefin resin 2: "Novatec (registered trademark) PP MA3" (manufactured by Japan Polypropylene Corporation), homopolypropylene, MFR = 11 g/10 min (at 230°C), melting point: 165°C

[Examples 1 to 11] Production of Thermoplastic Polymer Composition

Using the apparatus shown in Fig. 1 or Fig. 2, thermoplastic polymer compositions were produced in the following manner by using respective components in blending amounts as described in the following Table 3.
The aforementioned polyisobutylene (b) was supplied to a twin-screw/single-screw extruder of a counter-rotating type, "HYPERREX330" (manufactured by Kobe Steel, Ltd.) and plasticized, and the resultant was supplied to a twin-screw extruder "HYPERKTX46" (manufactured by Kobe Steel, Ltd.) via a gear pump "EX56-5GP/SE" (manufactured by Kobe Steel, Ltd.). At the same time, the hydrogenated copolymer (a), or the hydrogenated copolymer (a) and the polyolefin resin were supplied to a twin-screw extruder, and the aforementioned plasticized polyisobutylene (b) was kneaded with the hydrogenated block copolymer (a) and the polyolefin resin by the twin-screw extruder under a condition described in Table 3, thereby producing a thermoplastic polymer composition.
The physical properties and characteristics of each of the resulting thermoplastic polymer compositions were measured and evaluated according to the aforementioned methods. The results are shown in Table 3.
In the aforementioned twin-screw/single-screw extruder, gear pump, and twin-screw extruder, the following conditions were adopted.

[Condition of Twin-Screw/Single-Screw Extruder]

Number of revolution of screw: 5.8 min⁻¹
Rotation direction of screw: Counter-rotating
Kind of screw: Intermeshing type and conical type
Axial direction of screw: Oblique
Discharge pressure of polyisobutylene (b): 2.0 MPa
Extrusion rate of polyisobutylene (b): 33 kg/hr
Temperature (within the barrel) of polyisobutylene (b): 33°C

[Condition of Gear Pump]

Discharge rate: 33 kg/hr
Rotational speed: 6.6 min⁻¹

[Condition of Twin-Screw Extruder]

Number of revolution of screw: 300 min⁻¹ in each screw
Rotation direction of screw: Co-rotating
Ratio (L/D) of whole length (L) to diameter (D) of screw: 37.3
Kind of screw: Intermeshing type
Axial direction of screw: Parallel
Extrusion rate of thermoplastic polymer composition: 100 kg/hr
Setting temperature of cylinder: 200°C
Temperature (within the barrel) of thermoplastic polymer composition: 225°C

[Comparative Example 1] Production of Thermoplastic Polymer Composition

A thermoplastic polymer composition was produced in the same manner as in Example 1, except that the gear pump was not used, and then measured and evaluated. The results are shown in Table 4.

[Comparative Example 2] Production of Thermoplastic Polymer Composition

A thermoplastic polymer composition was produced in the same manner as in Example 1, except that a twin-screw/single-screw extruder of a co-rotating type was used as the twin-screw/single-screw extruder, and then measured and evaluated. The results are shown in Table 4.

[Comparative Example 3] Production of Thermoplastic Polymer Composition

A thermoplastic polymer composition was produced in the same manner as in Example 1, except that the gear

**EP 3 339 353 B1**

pump was not used, and that a twin-screw/single-screw extruder of a co-rotating type was used as the twin-screw/single-screw extruder, and then measured and evaluated. The results are shown in Table 4.

[Comparative Example 4] Production of Thermoplastic Polymer Composition

In Example 1, it was attempted to supply the polyisobutylene (b) directly to the twin-screw extruder without using the twin-screw/single-screw extruder and the gear pump. However, the kinematic viscosity of the polyisobutylene (b) was high and very sticky, so that the work was utterly difficult.

However, the polyisobutylene (b) was manually thrusted into the twin-screw extruder as far as possible, thereby obtaining a thermoplastic polymer composition. The thus obtained thermoplastic polymer composition was measured and evaluated. The results are shown in Table 4.

Table 3

| | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| Component | Hydrogenated block copolymer (a) | (a)-1 | 100 | 100 | 100 | 100 | 100 | | 100 | 100 | 100 | 100 | 100 |
| | | (a)-2 | | | | | | 100 | | | | | |
| | Polyisobutylene (b) | (b)-1 | | 50 | | | | | | | | | |
| | | (b)-2 | 50 | | 50 | | | 50 | 100 | 50 | 50 | 50 | 50 |
| | | (b)-3 | | | | 50 | | | | | | | |
| | | (b)-4 | | | | | 50 | | | | | | |
| | Polyolefin resin 1 | | 20 | 20 | 20 | 20 | 20 | 20 | 50 | | | | |
| | Polyolefin resin 2 | | | | | | | | | | 10 | 20 | 50 |
| First step | Rotation direction of screw | | Counter-rotating | Counter-rotating | Counter-rotating | Counter-rotating | Counter-rotating | Counter-rotating | Counter-rotating | Counter-rotating | Counter-rotating | Counter-rotating | Counter-rotating |
| | Kind of screw | | Conical | Conical | Conical | Conical | Conical | Conical | Conical | Conical | Conical | Conical | Conical |
| Second step | Position of hopper of twin-screw extruder | | Basal part (Fig. 1) | Basal part (Fig. 1) | Central part (Fig. 2) | Basal part (Fig. 1) | Basal part (Fig. 1) | Basal part (Fig. 1) | Basal part (Fig. 1) | Basal part (Fig. 1) | Basal part (Fig. 1) | Basal part (Fig. 1) | Basal part (Fig. 1) |
| | Gear pump | | Yes | Yes | Yes | Yes | Yes | Yes | Yes | Yes | Yes | Yes | Yes |
| Measurement and evaluation results | Hardness (JIS-A) | | 56 | 54 | 56 | 55 | 55 | 45 | 67 | 42 | 56 | 74 | 89 |
| | Tensile strength at break | (MPa) | 6.1 | 5.4 | 6 | 7.1 | 5.6 | 1.5 | 4.7 | 1.1 | 5 | 7.4 | 10 |
| | Tensile elongation at break | (%) | 710 | 630 | 700 | 720 | 680 | 750 | 580 | 700 | 690 | 730 | 500 |
| | Heat resistance | (%) | 36 | 36 | 36 | 42 | 43 | 80 | 52 | 45 | 43 | 41 | 49 |
| | Production easiness | | A | A | A | A | A | A | A | A | A | A | A |
| | Production stability | | A | A | A | A | A | A | A | A | A | A | A |

Table 4

| | | | Comparative Example 1 | Comparative Example 2 | Comparative Example 3 | Comparative Example 4 |
|---|---|---|---|---|---|---|
| Component | Hydrogenated block copolymer (a) | (a)-1 | 100 | 100 | 100 | 100 |
| | | (a)-2 | | | | |
| | Polyisobutylene (b) | (b)-1 | | | | |
| | | (b)-2 | 50 | 50 | 50 | 50 |
| | | (b)-3 | | | | |
| | | (b)-4 | | | | |
| | Polyolefin resin 1 | | 20 | 20 | 20 | 20 |
| | Polyolefin resin 2 | | | | | |
| First step | Rotation direction of screw | | Counter-rotating | Co-rotation | Co-rotation | Alternate step 1) |
| | Kind of screw | | Conical | Conical | Conical | |
| Second step | Position of hopper of twin-screw extruder | | Basal part (Fig. 1) | Basal part (Fig. 1) | Basal part (Fig. 1) | |
| | Gear pump | | No | Yes | No | |
| Measurement and evaluation results | Hardness (JIS-A) | | 55 | 53 | 54 | - |
| | Tensile strength at break | (MPa) | 6 | 5.6 | 5.5 | - |
| | Tensile elongation at break | (%) | 700 | 730 | 750 | - |
| | Heat resistance | (%) | 38 | 36 | 37 | - |
| | Production easiness | | A | A | A | C |
| | Production stability | | C | C | C | C |

1) A step of supplying the polyisobutylene (b) directly to the twin-screw extruder without going through the first step and kneading with the hydrogenated block copolymer (a) was adopted.

The thermoplastic polymer composition obtained by the production method of the present invention is excellent in mechanical characteristics and heat resistance, and therefore, it can be applied to various molded articles, such as a sheet, a film, a plate member, a tube, a hose pipe, a belt, etc.

For example, the thermoplastic polymer composition obtained by the production method of the present invention can be effectively applied to a wide variety of fields inclusive of various anti-vibration or damping materials, such as an anti-vibration rubber, a mat, a sheet, a cushion, a damper, a pad, a mount gum, etc.; a footwear application, such as sport shoes, fashion sandals, etc.; a consumer electrical appliance application, such as a television set, a stereo audio set, a cleaner, a refrigerator, etc.; a building material application, such as a packing for sealing to be used in a door and a window frame of a building, etc.; an automobile interior and exterior application, such as a bumper member, a body panel, a weather strip, a grommet, a skin material of instrument panel, an air-bag cover, etc.; various grip members of scissors, a screwdriver, a toothbrush, poles for skiing, and the like; a food wrapping material, such as a wrapping film for foods, etc.; a protective film; a medical device, such as an infusion solution bag, a syringe, a catheter, etc.; a stopper and a cap liner for a container for storing foods, beverages, drugs, and the like, and so on.

Reference Signs List

1: Twin-screw extruder
2: Twin-screw/single-screw extruder
3: Quantitative pump
4: Screw driving device
5: Hopper
5': Supply port
6: Screw
6': Screw blade
7: Screw
7': Screw blade

## Claims

1. A method for producing a thermoplastic polymer composition comprising a hydrogenated block copolymer (a) and a polyisobutylene (b) having a peak top molecular weight (Mp) of 5,000 to 80,000 expressed in terms of standard polystyrene as determined by gel permeation chromatography, the method comprising a first step and a second step:

   First step: a step of supplying the polyisobutylene (b) to a twin-screw/single-screw extruder (2) of a counter-rotating type, to plasticize the polyisobutylene (b), wherein the twin-screw/single-screw extruder (2) is equipped with a screw (7) which is configured of two screws having a different length from each other, and an upstream part is twin-screw, whereas a downstream part is single-screw; and
   Second step: a step including a step (i) and a step (ii):

   (i) a step of supplying the hydrogenated block copolymer (a) to a twin-screw extruder (1); and
   (ii) a step of supplying the polyisobutylene (b) plasticized in the first step to the twin-screw extruder (1) via a quantitative pump and kneading the polyisobutylene (b) together with the hydrogenated block copolymer (a) supplied in the step (i).

2. The method for producing a thermoplastic polymer composition according to claim 1, wherein in the step (i) of the second step, the hydrogenated block copolymer (a) is supplied from a hopper (5) on the basal part side of a barrel of the twin-screw extruder (1).

3. The method for producing a thermoplastic polymer composition according to claim 1 or 2, wherein in the step (ii) of the second step, the polyisobutylene (b) plasticized in the first step is supplied from at least one of a supply port on the basal part side and a supply port of the central part of the barrel of the twin-screw extruder (1).

4. The method for producing a thermoplastic polymer composition according to any one of claims 1 to 3, wherein the hydrogenated block copolymer (a) is a hydrogenated block copolymer that is a hydrogenated product of a block copolymer having a polymer block (A) containing a structural unit derived from an aromatic vinyl compound and a polymer block (B) containing a structural unit derived from isoprene or a structural unit derived from a mixture of isoprene and butadiene and having a total content of a 3,4-bond unit and a 1,2-bond unit of 45% or more, and the hydrogenated block copolymer (a) has a peak top molecular weight (Mp) of 250,000 to 500,000 expressed in terms of standard polystyrene as determined by gel permeation chromatography.

5. The method for producing a thermoplastic polymer composition according to any one of claims 1 to 4, wherein the peak top molecular weight (Mp) of the polyisobutylene (b) is from 20,000 to 80,000 expressed in terms of standard polystyrene as determined by gel permeation chromatography.

6. The method for producing a thermoplastic polymer composition according to any one of claims 1 to 5, wherein in the step (i), a polyolefin resin is further supplied to the twin-screw extruder (1).

7. The method for producing a thermoplastic polymer composition according to claim 6, wherein the polyolefin resin is at least one selected from the group consisting of polyethylene, a homopolymer of propylene, a block copolymer of propylene and ethylene, a random copolymer of propylene and ethylene, and a copolymer of propylene or ethylene and an α-olefin.

## Patentansprüche

1. Verfahren zur Herstellung einer thermoplastischen Polymerzusammensetzung umfassend ein hydriertes Blockcopolymer (a) und ein Polyisobutylen (b) mit einem Peakspitzen-Molekulargewicht (Mp) von 5.000 bis 80.000, ausgedrückt als Standard-Polystyrol durch Gelpermeationschromatographie bestimmt, wobei das Verfahren einen ersten Schritt und einen zweiten Schritt umfasst:

   erster Schritt: ein Schritt des Zuführens des Polyisobutylens (b) zu einem Zweischnecken/Einschnecken-Extruder (2) eines gegenläufigen Typs, um das Polyisobutylen (b) zu plastifizieren, wobei der Zweischnecken/Einschnecken-Extruder (2) mit einer Schnecke (7) ausgestattet ist, die aus zwei Schnecken mit voneinander verschiedener Länge ausgebildet ist, und ein vorgeschalteter Teil zweischneckig ist, während ein nachgeschalteter Teil einschneckig ist; und
   zweiter Schritt: ein Schritt einschließend einen Schritt (i) und einen Schritt (ii):

   (i) ein Schritt des Zuführens des hydrierten Blockcopolymers (a) zu einem Doppelschneckenextruder (1); und
   (ii) einen Schritt des Zuführens des im ersten Schritt plastifizierten Polyisobutylens (b) in den Doppelschneckenextruder (1) über eine Dosierpumpe und des Knetens des Polyisobutylens (b) zusammen mit dem im Schritt (i) zugeführten hydrierten Blockcopolymer (a).

2. Verfahren zur Herstellung einer thermoplastischen Polymerzusammensetzung nach Anspruch 1, wobei in dem Schritt (i) des zweiten Schritts das hydrierte Blockcopolymer (a) aus einem Trichter (5) auf der Basisteilseite eines Zylinders des Doppelschneckenextruders (1) zugeführt wird.

3. Verfahren zur Herstellung einer thermoplastischen Polymerzusammensetzung nach Anspruch 1 oder 2, wobei in dem Schritt (ii) des zweiten Schritts das im ersten Schritt plastifizierte Polyisobutylen (b) von mindestens einem von einer Zufuhröffnung auf der Seite des Basisteils und einer Zufuhröffnung des Mittelteils des Zylinders des Doppelschneckenextruders (1) zugeführt wird.

4. Verfahren zur Herstellung einer thermoplastischen Polymerzusammensetzung nach einem der Ansprüche 1 bis 3, wobei das hydrierte Blockcopolymer (a) ein hydriertes Blockcopolymer ist, das ein hydriertes Produkt eines Blockcopolymers mit einem Polymerblock (A), der eine von einer aromatischen Vinylverbindung abgeleitete Struktureinheit enthält, und einem Polymerblock (B), der eine von Isopren abgeleitete Struktureinheit oder eine von einem Gemisch aus Isopren und Butadien abgeleitete Struktureinheit enthält und einen Gesamtgehalt von einer 3,4-Bindungseinheit und einer 1,2-Bindungseinheit von 45 % oder mehr aufweist, ist, und das hydrierte Blockcopolymer (a) ein Peakspitzen-Molekulargewicht (Mp) von 250.000 bis 500.000 aufweist, ausgedrückt als Standard-Polystyrol durch Gelpermeationschromatographie bestimmt.

5. Verfahren zur Herstellung einer thermoplastischen Polymerzusammensetzung nach einem der Ansprüche 1 bis 4, wobei das Peakspitzen-Molekulargewicht (Mp) des Polyisobutylens (b) 20.000 bis 80.000 beträgt, ausgedrückt als Standard-Polystyrol durch Gelpermeationschromatographie bestimmt.

6. Verfahren zur Herstellung einer thermoplastischen Polymerzusammensetzung nach einem der Ansprüche 1 bis 5, wobei in dem Schritt (i) ein Polyolefinharz weiter dem Doppelschneckenextruder (1) zugeführt wird.

7. Verfahren zur Herstellung einer thermoplastischen Polymerzusammensetzung nach Anspruch 6, wobei das Polyolefinharz mindestens eines, ausgewählt aus der Gruppe, bestehend aus Polyethylen, einem Homopolymer von Propylen, einem Blockcopolymer von Propylen und Ethylen, einem statistischen Copolymer von Propylen und Ethylen und einem Copolymer von Propylen oder Ethylen und einem α-Olefin, ist.

## Revendications

1. Procédé de production d'une composition de polymère thermoplastique comprenant un copolymère bloc hydrogéné (a) et un polyisobutylène (b) présentant un poids moléculaire limite de crête (Mp) allant de 5000 à 80000, exprimé en termes de polystyrène standard, tel que c'est déterminé par chromatographie par perméation de gel, le procédé comprenant une première étape et une deuxième étape:

Première étape: une étape d'alimentation du polyisobutylène (b) à une extrudeuse à double vis/monovis (2) du type contrarotatif, pour plastifier le polyisobutylène (b), dans lequel l'extrudeuse à double vis/monovis (2) est équipée d'une vis (7) constituée de deux vis ayant une longueur différente l'une de l'autre, et une partie en amont est à double vis, tandis que la partie en aval est monovis; et
Deuxième étape: une étape comprenant une étape (i) et une étape (ii):

(i) une étape d'alimentation du copolymère bloc hydrogéné (a) à une extrudeuse à double vis (1); et
(ii) une étape d'alimentation du polyisobutylène (b) plastifié à la première étape à l'extrudeuse à double vis (1) en passant par une pompe quantitative et pétrissage du polyisobutylène (b) avec le copolymère bloc hydrogéné (a) fourni à l'étape (i).

2. Procédé de production d'une composition de polymère thermoplastique selon la revendication 1, dans lequel à l'étape (1) de la deuxième étape, le copolymère bloc hydrogéné (a) est alimenté d'une trémie (5) sur le côté d'une partie de base d'un cylindre de l'extrudeuse à double vis (1).

3. Procédé de production d'une composition de polymère thermoplastique selon la revendication 1 ou 2, dans lequel à l'étape (ii) de la deuxième étape, le polyisobutylène (b) plastifié à la première étape est alimenté d'au moins l'un d'un orifice d'alimentation sur le côté de partie de base et d'un orifice d'alimentation de la partie centrale du cylindre de l'extrudeuse à double vis (1).

4. Procédé de production d'une composition de polymère thermoplastique selon l'une quelconque des revendications 1 à 3, dans lequel le copolymère bloc hydrogéné (a) est un copolymère bloc hydrogéné, lequel est le produit hydrogéné d'un copolymère bloc ayant une séquence polymère (A) contenant un motif structurel dérivé d'un composé vinylaromatique et une séquence polymère (B) contenant un motif structurel dérivé de l'isoprène ou un motif structurel dérivé d'un mélange d'isoprène et de butadiène et ayant une teneur totale en motif à liaison 3,4- et en motif à liaison 1,2- de 45% ou plus, et le copolymère bloc hydrogéné (a) a un poids moléculaire limite de crête (Mp) allant de 250000 à 500000 exprimé en termes de polystyrène standard, comme c'est déterminé par chromatographie par perméation de gel.

5. Procédé de production d'une composition de polymère thermoplastique selon l'une quelconque des revendications 1 à 4, dans lequel le poids moléculaire limite de crête (Mp) du polyisobutylène (b) va de 20000 à 80000 exprimé en termes de polystyrène standard, comme c'est déterminé par chromatographie par perméation de gel.

6. Procédé de production d'une composition de polymère thermoplastique selon l'une quelconque des revendications 1 à 5, dans lequel à l'étape (i), une résine de polyoléfine est en outre alimentée à l'extrudeuse à double vis (1).

7. Procédé de production d'une composition de polymère thermoplastique selon la revendication 6, dans lequel la résine de polyoléfine est au moins l'une sélectionnée parmi le groupe consistant en polyéthylène, un homopolymère de propylène, un copolymère bloc de propylène et d'éthylène, un copolymère aléatoire de propylène et d'éthylène et un copolymère de propylène ou d'éthylène et une $\alpha$-oléfine.

EP 3 339 353 B1

Fig. 1

Second Step

First Step

22

Fig. 2

Fig. 3

Basal Part | Central Part

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2484717 A1
- WO 2011040586 A
- JP 2006256099 A
- JP 11262945 A
- WO 2011040585 A